# FASCICULE DE BREVET EUROPEEN

(11) **EP 3 015 732 B1**
(45) Date de publication et mention de la délivrance du brevet: **01.05.2019**
(21) Numéro de dépôt: 15192040.2
(22) Date de dépôt: 29.10.2015
(51) Int. Cl.: F16D 13/64

(54) **DISQUE D' EMBRAYAGE POUR EMBRAYAGE A FRICTION**
KUPPLUNGSSCHEIBE FÜR REIBUNGSKUPPLUNG
CLUTCH DISC FOR FRICTION CLUTCH

(30) Priorité: 30.10.2014 FR 1460437
(43) Date de publication de la demande: 04.05.2016
(73) Titulaire: Valeo Matériaux de Friction, 87020 Limoges (FR)
(72) Inventeur: PINEDA, Philippe, 19100 BRIVE LA GAILLARDE (FR); CROSLAND, Gérard, 23300 LA SOUTERRAINE (FR); DUCHATEL, Stephane, 80490 Merelessart (FR); BOUCHAUD, Frédéric, 87000 LIMOGES (FR)

(56) Documents cités:
- DE-A1- 10 218 472
- FR-A1- 2 010 191
- FR-A1- 2 541 739
- US-A- 5 927 459

## Description

La présente invention concerne un disque d'embrayage pour embrayage à friction.

L'invention s'applique notamment pour une transmission de véhicule automobile.

Il est connu, par exemple de la demande WO 2008/053125, d'utiliser un disque d'embrayage pour embrayage à friction, comprenant :
- un moyeu s'étendant selon un axe longitudinal,
- un flasque couplé au moyeu,
- un support rigidement couplé au flasque et s'étendant radialement au-delà du flasque, et
- une garniture de friction solidaire du support.

Dans ce disque, le support présente une portion dans laquelle il n'est ni au contact direct du flasque, ni au contact direct de la garniture de friction. Il est souhaitable que cette portion du support présente une certaine flexibilité axiale pour permettre un positionnement correct du disque d'embrayage par rapport aux autres composants de l'embrayage dans les diverses configurations de l'embrayage.

Il est connu de la demande DE10218472A1, un disque d'embrayage présentant un espace entre la garniture de friction et le support de cette garniture. Cet espace est obtenu par une découpe de la garniture de friction formant une arrête vive et un coin dans cette garniture.

Une telle découpe est relativement complexe à réaliser et nécessite l'emploi d'un outil 3 génératrices. De plus, les coins et arrêtes de cette découpe concentrent les contraintes par exemple lorsque la garniture de friction est enserrée entre des pièces du dispositif d'embrayage. La garniture présente donc un gradient de contrainte important au niveau de cette découpe, ce qui la fragilise.

Il existe ainsi un besoin pour disposer d'un disque d'embrayage avec un support présentant cette flexibilité axiale, tout en étant relativement simple et peu coûteux à réaliser.

L'invention a pour but de répondre à ce besoin et elle y parvient, à l'aide d'un disque d'embrayage selon la revendication 1.

Un tel disque présente une dimension radiale de la portion du support qui est radialement en-deça de la garniture de friction et radialement au-delà du flasque et qui n'est en contact avec aucune de ces deux pièces augmentée par rapport aux disques selon l'art antérieur. On peut ainsi réduire les problèmes de broutement d'embrayage, notamment avec des boîtes robotisées, et les problèmes de crissement d'embrayage.

La zone de contact peut être définie comme l'intersection du support et du bord radialement intérieur.

Selon l'invention, il existe une distance nulle entre la zone de contact et ladite partie du bord radialement intérieur de la garniture.

Au sens de la présente demande, on désigne par « rayon d'une pièce » la distance radiale minimale entre cette pièce et l'axe du moyeu.

Toujours au sens de la présente demande, « axialement » signifie « parallèlement à l'axe du moyeu », « radialement » signifie « le long d'un axe appartenant à un plan perpendiculaire à l'axe du moyeu et coupant cet axe», et « angulairement » ou « circonférentiellement » signifie « autour de l'axe du moyeu ».

Enfin, toujours au sens de la présente demande, « s'éloigner » et « se rapprocher » doivent être compris au sens strict, les cas de maintien à distance constante étant exclus.

La garniture de friction définit une surface de friction sensiblement perpendiculaire à l'axe, le bord radialement intérieur de la garniture de friction étant axialement disposé entre la surface de friction et le support.

Ladite partie du bord radialement intérieur de la garniture de friction peut permettre de conserver le rayon de la surface de friction inchangé par rapport à l'art antérieur, tout en augmentant la longueur de ladite portion du support radialement disposée entre le flasque et la garniture de friction, et ainsi la flexibilité de cette portion. Le rayon intérieur de la surface de friction n'étant pas modifié, la surface de friction apte à venir en contact avec le plateau de pression ou de réaction de l'embrayage n'est alors pas modifiée, de sorte que les performances de l'embrayage en termes de transmission de couple restent les mêmes.

En variante, le rayon intérieur de la surface de friction peut être légèrement augmenté par rapport à l'art antérieur.

Selon un exemple de mise en oeuvre de l'invention, on utilise ladite partie du bord radialement intérieur de la garniture pour augmenter la longueur de la portion du support radialement au-delà du flasque et radialement en deça de la garniture de friction.

La projection dans un plan perpendiculaire à l'axe du moyeu de la partie du bord radialement intérieur de la garniture de friction se rapprochant de cet axe peut présenter une dimension radiale inférieure à 20% de la dimension radiale de la garniture de friction, cette dimension radiale de la garniture de friction étant la différence entre le rayon extérieur et le rayon intérieur de la garniture de friction. La dimension radiale de cette projection est par exemple comprise entre 1% et 15% de la dimension radiale de la garniture de friction.

Selon un exemple de mise en oeuvre de l'invention, cette partie du bord radialement intérieur de la garniture de friction peut présenter une dimension axiale comprise entre 10 et 80 %, notamment entre 10% et 40%, de la dimension axiale du bord radialement intérieur de la garniture de friction. En variante, cette partie peut être ménagée sur la totalité du bord radialement intérieur de la garniture de friction.

Lorsque la partie se rapprochant de l'axe de rotation du moyeu n'est pas ménagée sur la totalité du bord radialement intérieur de la garniture de friction, ledit bord est complété par une deuxième partie. Cette deuxième partie peut s'étendre radialement en-deça de la partie se rapprochant de l'axe, notamment selon une direction sensiblement parallèle à l'axe de rotation du moyeu.

Selon un exemple de mise en oeuvre de l'invention et indépendamment de son étendue axiale, la partie du bord radialement intérieur de la garniture de friction peut définir un chanfrein. En variante, il peut s'agir d'une partie incurvée, par exemple convexe ou concave ou une partie de toute forme.

Lorsque la partie définit un chanfrein, l'angle de ce dernier, mesuré par rapport à l'axe de rotation du moyeu peut être compris entre 15° et 85°, notamment entre 55° et 85°. Cet angle est de préférence choisi pour ne pas modifier le rayon de la surface de friction.

Selon l'un ou l'autre des exemples de mise en oeuvre mentionnés ci-dessus, le flasque peut avoir un bord radialement extérieur dont au moins une partie s'éloigne de l'axe de rotation du moyeu lorsque l'on se déplace le long de ladite partie depuis le support, cette partie définissant notamment un chanfrein. De cette manière, la longueur de la portion du support radialement au-delà du flasque et radialement en deça de la garniture de friction et non en contact avec ces derniers est d'une part augmentée grâce au décalage radial obtenu par la configuration du bord radialement intérieur de la garniture de friction, mais également grâce à cette configuration du bord radialement extérieur du flasque. On peut ainsi accroître encore la flexibilité axiale de cette portion du support.

Dans tout ce qui précède, la longueur gagnée pour cette portion du support radialement au-delà du flasque et radialement en deça de la garniture peut être comprise entre 110% et 150% de la dimension radiale égale à la différence entre le rayon intérieur de la garniture de friction et la dimension radiale extérieure maximale du flasque. Lorsque le bord radialement extérieur du flasque est dépourvu de partie s'éloignant de l'axe de rotation du moyeu, cette dimension radiale extérieure maximale du flasque est égale au rayon extérieur du flasque.

Dans tout ce qui précède, il peut exister au moins un plan qui s'étend perpendiculairement à l'axe de rotation du moyeu et qui coupe à la fois la partie du bord radialement intérieur de la garniture de friction se rapprochant de l'axe de rotation du moyeu et la partie du bord radialement extérieur du flasque s'éloignant du moyeu. Lesdites parties peuvent donc s'étendre dans un même espace axial.

Dans tout ce qui précède la garniture de friction et le support peuvent être solidarisées par rivetage. En variante, la garniture de friction et le support peuvent être solidarisés par collage.

En variante encore, la garniture de friction peut être surmoulée sur le support.

La garniture de friction peut être composée, en totalité ou en partie, de matériau de friction à matrice organique à structure fils continus, notamment lorsque la garniture de friction et le support sont solidarisées par collage.

En variante, la garniture de friction peut être composée, en totalité ou en partie, de matériau de friction à matrice organique contenant des fibres courtes, notamment lorsque la garniture de friction est surmoulée sur le support.

Selon l'un ou l'autre des exemples de mise en oeuvre mentionnés ci-dessus, le support peut présenter des zones de progressivité configurées pour être élastiquement déformables axialement. Ces zones de progressivité peuvent comprendre au moins une ailette permettant cette déformation élastique axiale. La ou les ailettes peuvent être découpées et formées dans le support. En variante, la ou les ailettes sont rapportées sur le support, ce dernier ayant été préalablement découpé. L'invention permet alors de réduire les contraintes à la rupture du disque qui peut être qualifié de « progressif ».

Deux garnitures de friction peuvent être solidaires du support, chaque garniture de friction s'étendant alors axialement d'un côté du support. Dans ce cas, les ailettes sont axialement disposées entre les deux garnitures de friction.

Lorsque deux garnitures de friction s'étendant chacune axialement d'un côté du support sont prévues, seule l'une de ces garnitures peut présenter un bord radialement intérieur tel que mentionné ci-dessus. En variante, chacune de ces deux garnitures de friction peut présenter un tel bord radialement intérieur.

Le flasque peut être solidaire en rotation du moyeu et le disque peut alors être dépourvu d'amortisseur de torsion. Dans un tel cas, les garnitures de friction sont solidaires en rotation du moyeu, voire rigidement couplées avec le moyeu. Le disque peut alors être associé à un amortisseur de torsion « externe » tel qu'un double volant amortisseur.

En variante, le flasque peut former le flasque d'entrée d'un amortisseur de torsion du disque, le disque comprenant en outre :
- un flasque de sortie de cet amortisseur de torsion, solidaire en rotation du moyeu, et
- au moins un organe de rappel élastique générant un effort s'opposant à la rotation du flasque d'entrée de l'amortisseur par rapport au flasque de sortie de l'amortisseur.

Selon cette variante, le flasque d'entrée peut être l'un d'une rondelle de guidage et d'un voile de l'amortisseur.

Le disque comprend par exemple deux rondelles de guidage entre lesquelles est disposé axialement le voile.

Le flasque d'entrée peut être l'une des rondelles de guidage, auquel cas le voile définit le flasque de sortie solidaire en rotation du moyeu.

En variante, le flasque d'entrée est le voile, auquel cas le flasque de sortie solidaire en rotation du moyeu est formé par l'une des rondelles de guidage.

Dans tout ce qui précède, le disque peut être intégré à un embrayage présentant un plateau de pression conique, une telle forme du plateau de pression de l'embrayage favorisant la portée du plateau sur le diamètre extérieur des garnitures de friction.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique un disque de friction selon un exemple de mise en oeuvre de l'invention,
- la figure 2 représente de façon schématique une partie du disque de friction de la figure 1, et
- la figure 3 est un détail de la figure 2,

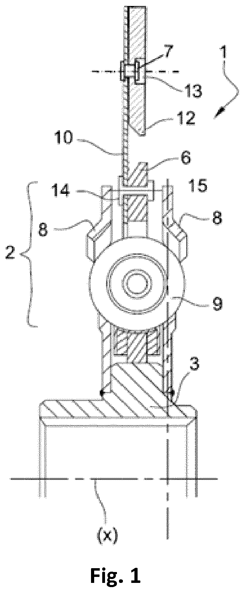

On a représenté à la figure 1 un disque de friction 1 selon l'invention. Dans l'exemple représenté, ce disque 1 comprend un amortisseur de torsion 2 selon un exemple de mise en oeuvre de l'invention. Ce disque de friction 1 comprend un moyeu 3 s'étendant selon un axe longitudinal X autour duquel il peut tourner. Le moyeu 3 est par exemple monté sur une portion d'un arbre d'entrée non représenté d'une boîte de vitesses et solidaire en rotation de cet arbre.

De façon connue, l'amortisseur 2 comprend un flasque d'entrée 6 et un flasque de sortie 8 entre lesquels est interposé un organe de rappel élastique 9, ce dernier permettant un déplacement en rotation limité entre les flasques d'entrée 6 et de sortie 8. Dans l'exemple décrit, le flasque d'entrée 6 est un voile rigidement couplé à un support 10 solidaire de garnitures de friction 12. A la figure 1, seule une garniture de friction 12 est représentée, une autre garniture de friction étant également portée par le support 10 et agencée de l'autre côté du support 10 par rapport à la garniture 12 représentée. Le couplage rigide entre le voile 6 et le support 10 est par exemple effectué à l'aide de rivets 14. Chaque garniture de friction définit une surface de friction 30, cette dernière s'étendant sensiblement perpendiculairement à l'axe X.

Comme on peut le voir sur la figure 1, le flasque de sortie 8 est ici formé par une rondelle de guidage axialement décalée par rapport à une autre rondelle de guidage, le voile 6 étant disposé axialement entre ces rondelles de guidage 8. Les rondelles de guidage 8 sont solidaires et fixées en rotation sur le moyeu 3, par exemple au moyen de cannelures.

Dans l'exemple considéré, l'amortisseur 2 comprend une pluralité d'organes de rappel élastique 9 se succédant angulairement, chaque organe de rappel élastique 9 étant à la fois reçu dans cet exemple:
- dans une fenêtre ménagée dans le flasque 6,
- dans une fenêtre ménagée dans le support 10, et
- dans une fenêtre ménagée dans chaque rondelle de guidage 8.

Comme décrit à la figure 1, la garniture de friction 12 comprend un trou 13 avec une partie suffisamment large pour recevoir une tête de rivet 7 et une partie plus étroite pour permettre le déplacement du corps de rivet sans autoriser le passage de la tête de rivet 7. En fond de la partie la plus large se trouve une face de lamage sur laquelle peut venir s'appuyer la tête de rivet 7. Chaque trou 13 se trouve un regard d'un trou agencé dans le support 10. Les corps de rivet 7 traversent chaque trou 13 afin de solidariser en rotation la garniture de friction 12 et le support 10.

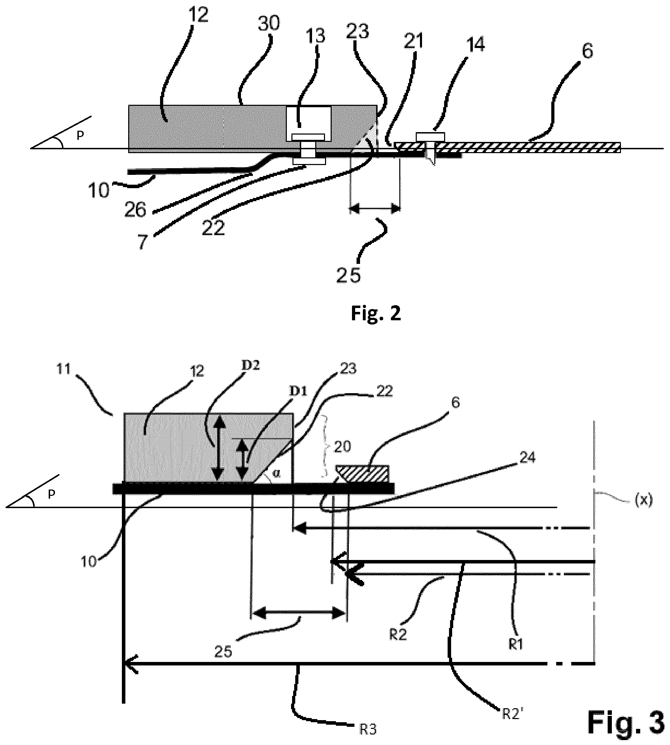

On a représenté de façon schématique à la figure 2 une partie du disque de friction 1 de la figure 1 La figure 3 représente, en détail, une vue schématique du même disque de friction 1 représenté à la figure 2. Les figures 2 et 3 sont des vues en coupes réalisées selon un plan contenant l'axe de rotation X.

Comme on peut le voir, la garniture de friction 12 a un bord radialement intérieur 20, ce bord définit, au niveau de la surface de friction 30, une surface cylindrique de rayon R1 tout autour de l'axe de rotation X du moyeu 3. La garniture de friction 12 présente également un bord radialement extérieur définissant une surface cylindrique de rayon R3 tout autour de l'axe de rotation X du moyeu.

Comme on peut également le voir, ce bord radialement intérieur 20 présente deux parties :
- une partie 22 définissant un chanfrein et s'étendant depuis une zone de contact du bord radialement intérieur 20 avec le support 10, et
- une partie 23 parallèle à l'axe de rotation X.

La partie 22 présente une dimension axiale D1 comprise entre 10 et 40 % de la dimension axiale D2 de la garniture de friction 12.

Dans l'exemple considéré, l'angle du chanfrein défini par la partie 22, mesuré par rapport à l'axe de rotation X du moyeu 3 est compris entre 55° et 85°. Cet angle α est ici choisi de manière à ne pas modifier le bord radialement intérieur de la surface de friction 30.

Le chanfrein défini par la partie 22 permet d'augmenter la longueur de la portion 25 du support 10 radialement au-delà du flasque 6 et radialement en deça de la garniture de friction 12 et sans contact avec les pièces 6 et 12.

Comme on peut le voir aux figures 2 et 3, le flasque 6 a un bord radialement extérieur 21. Ce bord 21 présente également une partie 24 définissant un chanfrein. Cette partie 24 est en contact avec le flasque 6. Le chanfrein défini par la partie 24 permet alors encore d'augmenter la longueur de la portion 25 du support 10 radialement au-delà du flasque 6 et radialement en deça de la garniture de friction 12 et sans contact avec les pièces 6 et 12. Du fait de l'existence du chanfrein 24, le rayon extérieur du flasque R2 est inférieur à la dimension radiale extérieure maximale R2' du flasque 6. L'augmentation de la longueur de la portion 25, permise par ces chanfreins 22 et 24, est ici comprise entre 110 et 150 % de la dimension radiale égale à la différence entre R1 et R2'.

Comme on peut le voir, il existe un plan P, perpendiculaire à l'axe de rotation X, coupant la partie 22 du bord radialement intérieur 20 de la garniture 12 et la partie 24 du bord radialement extérieur 21 du flasque 6. Les parties 22 et 24 s'étendent donc sur un même espace axial.

Il est également décrit à la figure 2 une zone de progressivité dans le support 10. Cette zone de progressivité prend ici la forme d'une ailette 26. Cette ailette 26 est déformable élastiquement axialement. Cette ailette 26 est formée dans le support 10. Plusieurs ailettes non représentées sont également prévues dans l'exemple décrit.

Dans un exemple précis de mise en oeuvre de l'invention, le rayon extérieur R3 de la garniture de friction 12 est égal à 395 mm, le rayon intérieur R1 de cette garniture 12 est égal à 220 mm, et la dimension axiale D2 de la garniture est de 4, 4mm.

Dans ce cas, le rapport entre la dimension axiale D1 de la partie 22 définissant le chanfrein et la dimension axiale D2 de la garniture 12 est égal à 18%. Toujours dans ce cas, l'angle α est égal à 85° et la projection dans un plan orthogonal à l'axe de rotation X de la partie 22 définissant le chanfrein est égale à 2% de la dimension radiale de la garniture 12, cette dimension radiale étant égale à la différence entre R3 et R1.

Le gain de longueur pour la portion 25 du support 10 radialement au-delà du flasque 6 et radialement en deça de la garniture de friction 12 et sans contact avec le flasque 6 et la garniture 12 est alors de 137% de la différence entre R1 et R2'.

Dans l'exemple précis mentionné ci-dessus, un calcul par élément fini de flexion du support 10 sous un couple de 900 Nm montre l'effet de l'invention en ce qui concerne la raideur axiale du support 10 :
- sans l'invention, la raideur axiale est de 71 017 N/mm,
- avec l'invention, la raideur axiale est de 30 527 N/mm.

L'invention n'est pas limitée à l'exemple qui vient d'être décrit.

En particulier, le bord radialement extérieur 21 du flasque peut être dépourvu de chanfrein, seul le bord radialement intérieur 20 de la garniture de friction 12 permettant alors d'augmenter la longueur de la portion 25 radialement au-delà du flasque 6 et radialement en deça de la garniture 12, et sans contact avec ces dernières. Dans ce cas, les grandeurs R2 et R2' sont confondues.

L'expression « comprenant un » doit être comprise comme synonyme de l'expression « comprenant au moins un », sauf lorsque le contraire est spécifié.

## Revendications

1. Disque d'embrayage (1) pour embrayage à friction, comprenant :
- un moyeu (3) s'étendant selon un axe (X) longitudinal,
- un flasque (6) couplé au moyeu (3),
- un support (10) rigidement couplé au flasque (6) et s'étendant radialement au-delà du flasque (6), et
- une garniture de friction (12) solidaire du support (10) définissant une surface de friction sensiblement perpendiculaire à l'axe (X),
le bord radialement intérieur (20) de la garniture (12) présentant une zone de contact avec le support (10)
**caractérisé en ce qu'**une à partie (22) sans contact avec le support (10) s'étende depuis cette zone de contact et se rapproche de l'axe (X) lorsque l'on se déplace le long de ladite partie depuis ladite zone de contact, et **en ce qu'**il existe une distance nulle entre la zone de contact et ladite partie du bord radialement intérieur de la garniture.

2. Disque (1) selon la revendication 1, la partie (22) du bord radialement intérieur (20) de la garniture de friction (12) présentant une dimension axiale (D1) comprise entre 10 et 80 % de la dimension axiale (D2) du bord radialement intérieur (20) de la garniture de friction (12).

3. Disque (1) selon l'une quelconque des revendications 1 et 2, ladite partie du bord radialement intérieur (20) de la garniture de friction (12) définissant un chanfrein.

4. Disque (1) selon l'une quelconque des revendications précédentes, le flasque (6) ayant un bord radialement extérieur (21) dont au moins une partie s'éloigne de l'axe (X) du moyeu (3) lorsque l'on se déplace le long de ladite partie depuis le support (10).

5. Disque (1) selon la revendication précédente, au moins un plan, s'étendant perpendiculairement à l'axe (X), coupant ladite partie du bord radialement intérieur (20) de la garniture de friction (12) et ladite partie du bord radialement extérieur (21) du flasque (6).

6. Disque (1) selon l'une quelconque des revendications précédentes, la garniture de friction (12) et le support (10) étant solidarisées par rivetage.

7. Disque (1) selon l'une quelconque des revendications précédentes, le support (10) présentant des zones de progressivité configurées pour être élastiquement déformables axialement.

8. Disque (1) selon l'une quelconque des revendications précédentes, le flasque (6) étant solidaire en rotation du moyeu (3) et le disque (1) étant dépourvu d'amortisseur de torsion.

9. Disque (1) selon l'une quelconque des revendications 1 à 7, le flasque (6) formant le flasque d'entrée d'un amortisseur de torsion, le disque (1) comprenant en outre :
- un flasque de sortie (8) de cet amortisseur de torsion, solidaire en rotation du moyeu (3), et
- au moins un organe de rappel élastique (9) générant un effort s'opposant à la rotation du flasque d'entrée (6) de l'amortisseur par rapport au flasque de sortie (8) de l'amortisseur.

10. Disque (1) selon la revendication 9, le flasque d'entrée (6) étant l'un d'une rondelle de guidage et d'un voile de l'amortisseur.

## Patentansprüche

1. Kupplungsscheibe (1) für eine Reibungskupplung, umfassend:
- eine Nabe (3), die sich entlang einer Längsachse (X) erstreckt,
- einen Flansch (6), der an die Nabe (3) gekoppelt ist,
- einen Träger (10), der starr an den Flansch (6) gekoppelt ist und sich radial über den Flansch (6) hinaus erstreckt, und
- einen Reibbelag (12), der mit dem Träger (10) verbunden ist, der eine Reibfläche definiert, die im Wesentlichen senkrecht auf die Achse (X) ist,
wobei der radial innere Rand (20) des Belags (12) eine Kontaktzone mit dem Träger (10) aufweist,
**dadurch gekennzeichnet, dass** sich ein Teil (22) ohne Kontakt mit dem Träger (10) von dieser Kontaktzone aus erstreckt und der Achse (X) bei Verlagerung entlang des Teils von der Kontaktzone aus annähert, und dass ein Abstand gleich Null zwischen der Kontaktzone und dem Teil des radial inneren Randes des Belags vorhanden ist.

2. Scheibe (1) nach Anspruch 1, wobei der Teil (22) des radial inneren Randes (20) des Reibbelags (12) eine Axialdimension (D1) zwischen 10 und 80 % der Axialdimension (D2) des radial inneren Randes (20) des Reibbelags (12) aufweist.

3. Scheibe (1) nach einem der Ansprüche 1 und 2, wobei der Teil des radial inneren Randes (20) des Reibbelags (12) eine Abschrägung definiert.

4. Scheibe (1) nach einem der vorhergehenden Ansprüche, wobei der Flansch (6) einen radial äußeren Rand (21) hat, von dem sich mindestens ein Teil von der Achse (X) der Nabe (3) bei Verlagerung entlang des Teils vom Träger (10) aus entfernt.

5. Scheibe (1) nach dem vorhergehenden Anspruch, wobei mindestens eine Ebene, die sich senkrecht auf die Achse (X) erstreckt, den Teil des radial inneren Randes (20) des Reibbelags (12) und den Teil des radial äußeren Randes (21) des Flansches (6) schneidet.

6. Scheibe (1) nach einem der vorhergehenden Ansprüche, wobei der Reibbelag (12) und der Träger (10) durch Nieten verbunden sind.

7. Scheibe (1) nach einem der vorhergehenden Ansprüche, wobei der Träger (10) Progressivitätszonen aufweist, die eingerichtet sind, um axial elastisch verformbar zu sein.

8. Scheibe (1) nach einem der vorhergehenden Ansprüche, wobei der Flansch (6) drehfest mit der Nabe (3) verbunden ist, und die Scheibe (1) keinen Torsionsdämpfer aufweist.

9. Scheibe (1) nach einem der Ansprüche 1 bis 7, wobei der Flansch (6) den Eingangsflansch eines Torsionsdämpfers bildet, wobei die Scheibe (1) ferner umfasst:
- einen Ausgangsflansch (8) dieses Torsionsdämpfers, der drehfest mit der Nabe (3) verbunden ist, und
- mindestens ein elastisches Rückstellelement (9), das eine Kraft erzeugt, die sich der Drehung des Eingangsflansches (6) des Dämpfers in Bezug zum Ausgangsflansch (8) des Dämpfers widersetzt.

10. Scheibe (1) nach Anspruch 9, wobei der Eingangsflansch (6) der eine einer Führungsscheibe und einer Flanschscheibe des Dämpfers ist.

## Claims

1. Clutch disc (1) for friction clutch, comprising:
- a hub (3) extending along a longitudinal axis (X),
- a flange (6) coupled to the hub (3),
- a support (10) rigidly coupled to the flange (6) and extending radially beyond the flange (6), and
- a friction lining (12) rigidly connected to the support (10) defining a friction surface substantially perpendicular to the axis (X), the radially inner edge (20) of the lining (12) having a contact zone with the support (10), **characterized in that** one portion (22) without contact with the support (10) extends from this contact zone and moves closer to the axis (X) travelling along said portion from said contact zone, and **in that** there is a zero distance between the contact zone and said portion of the radially inner edge of the lining.

2. Disc (1) according to Claim 1, the portion (22) of the radially inner edge (20) of the friction lining (12) having an axial dimension (D1) of between 10 and 80% of the axial dimension (D2) of the radially inner edge (20) of the friction lining (12).

3. Disc (1) according to any one of Claims 1 or 2, said portion of the radially inner edge (20) of the friction lining (12) defining a chamfer.

4. Disc (1) according to any one of the previous claims, the flange (6) having a radially outer edge (21) at least one portion of which moves away from the axis (X) of the hub (3) travelling along said portion from the support (10).

5. Disc (1) according to the previous claim, at least one plane, extending perpendicular to the axis (X), intersecting said portion of the radially inner edge (20) of the friction lining (12) and said portion of the radially outer edge (21) of the flange (6).

6. Disc (1) according to any one of the previous claims, the friction lining (12) and the support (10) being rigidly connected by riveting.

7. Disc (1) according to any one of the previous claims, the support (10) having progressiveness zones configured to be axially elastically deformable.

8. Disc (1) according to any one of the previous claims, the flange (6) being constrained to rotate with the hub (3) and the disc (1) not being provided with a torsional vibration damper.

9. Disc (1) according to any one of Claims 1 to 7, the flange (6) forming the input flange of a torsional vibration damper, the disc (1) also comprising:
- an output flange (8) of this torsion damper, constrained to rotate with the hub (3), and
- at least one elastic return member (9) generating a force opposing the rotation of the input flange (6) of the damper in relation to the output flange (8) of the damper.

10. Disc (1) according to Claim 9, the input flange (6) being one of a drive washer and a web of the damper.
